# EUROPEAN PATENT APPLICATION

(11) **EP 2 371 502 A1**
(43) Date of publication of application: **05.10.2011**
(21) Application number: 11160871.7
(22) Date of filing: 01.04.2011
(51) Int. Cl.: B27C 9/04, B27M 1/08, B23Q 39/02

(54) **Multifunctional machining head**

(30) Priority: 01.04.2010 IT MO20100098
(71) Applicant: SCM Group S.p.A., 47900 Rimini (IT)
(72) Inventor: Bernabei, Enrico, 47900, Rimini (IT)
(74) Representative: Villanova, Massimo

(57) **Abstract**

In a multifunctional machining head (1), for machining wood or similar material there are four machining units (7,7',7'',7''') that each have at least one tool-holding spindle (8) and are slidable along four prismatic axial sliding guides (5). The axial guides each have a vertical axis and are all fixed, without parts arranged in a cantilevered manner, to the same supporting structure.

## Description

### Background of the invention

The invention refers to an operating unit of multifunctional type.

In particular, the invention relates to an operating unit provided with several tool-holding spindles with which it is possible to associate tools that are suitable for various machinings, such as, for example, milling units, drills, multiple drilling heads, disc blades, etc.

Specifically, but not exclusively, the multifunctional operating unit can be used in a numerical control machining centre for machining products made of wood or of material that is similar to wood.

The prior art comprises the patent IT 1216860 that discloses a squaring edgebanding machine for machining wood, with multiple tool-holding spindles, having a multifunctional operating unit for machining the lower and upper surfaces near the edge of a workpiece; this operating unit comprises at least two spindles, each of which carries a machining tool; the operating unit is rotatably supported around a pin with the axes of the tool-holding spindles that extend radially with respect to the axis of the pin; the tools are brought to the machining position by rotation of the operating unit around the pin.

Some aspects of the multifunctional operating units of the prior art are improvable.

In the first place, the operational flexibility of known multifunctional operating units is improvable, in particular the capacity thereof to perform a multiplicity of operations in the same compact structure.

The strength and stiffness of known multifunctional operating units are also improvable, and, in particular, the capacity thereof to withstand great loads and minimise deformation.

### Summary of the invention

An object of the invention is to make a multifunctional operating unit that is able to improve one or more of the aforesaid aspects of prior art multifunctional operating units.

An advantage of the multifunctional operating unit is that it withstands great loads.

An advantage of the multifunctional operating unit is that the deformation of the multifunctional operating unit is minimised.

An advantage is to provide a multifunctional operating unit of reduced dimensions.

An advantage is to provide an operating unit which is constructionally simple and cheap.

An advantage is to provide a good quality multifunctional operating unit that is able to make products made of wood or material that is similar to wood.

Such aims and advantages and still others are all achieved by the operating unit according to one or more of the claims set out below.

### Short description of the drawings

The invention can be better understood and implemented with reference to the attached drawings that show an embodiment thereof by way of non-limiting example.

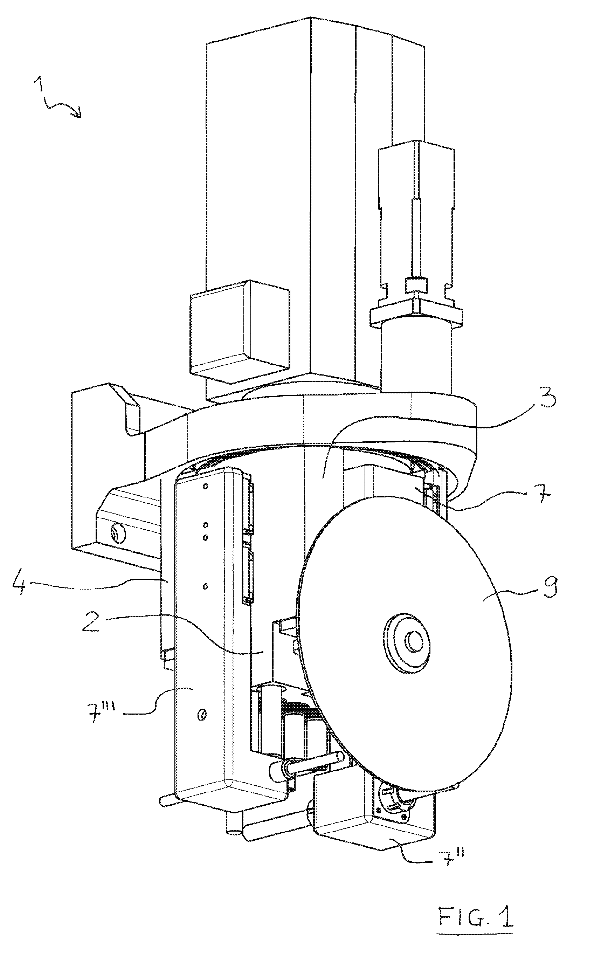

Figure 1 is a frontal perspective view of an embodiment of the operating unit according to the invention.

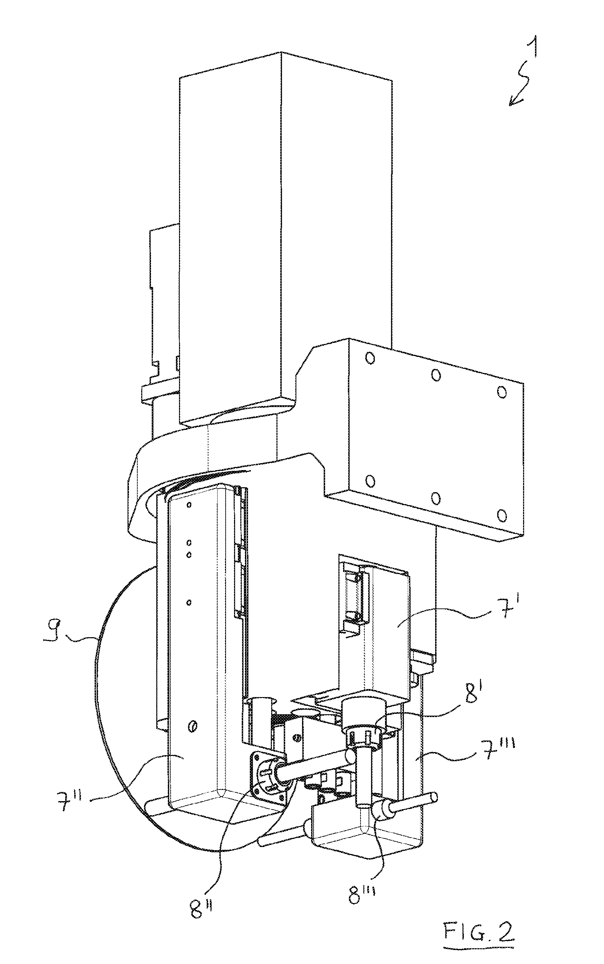

Figure 2 is a rear perspective view of the operating unit in figure 1.

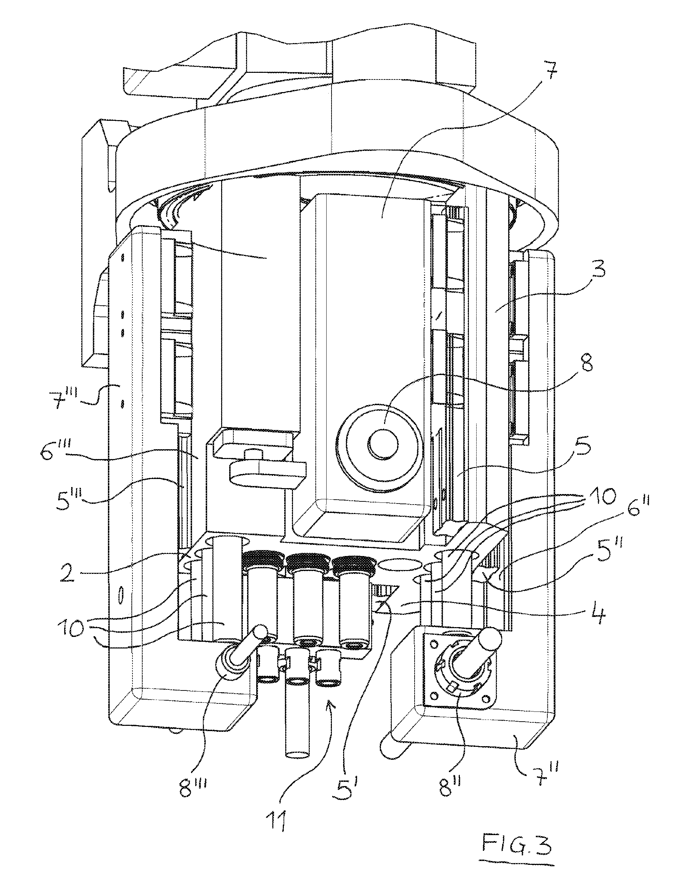

Figure 3 is an enlarged frontal perspective view of the operating unit in figure 1 with certain parts removed to show other parts more clearly.

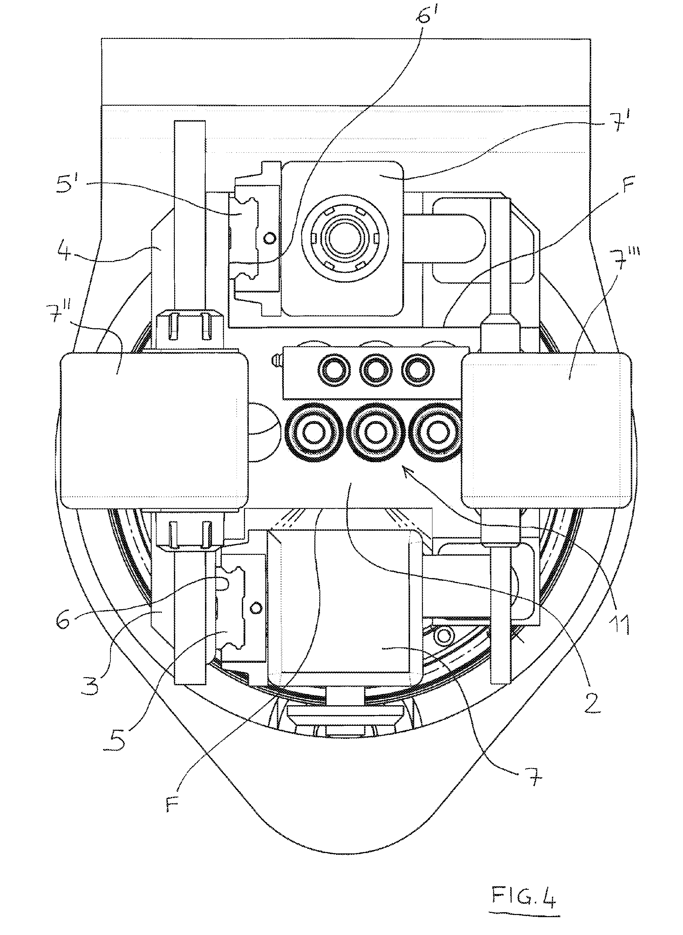

Figure 4 is a bottom plan view of the operating unit in figure 1.

### Detailed description

With reference to the aforesaid figures, with 1 has been indicated overall a multifunctional operating unit that is intended for use in a numerical control machine for machining workpieces made of wood or of material that is similar to wood.

The machine can be set up, in particular, to produce windows and doors in general, that are made of wood or similar material. The numerically controlled machine will be provided with multi-axis movements. The numerical control machine is of known type and will not therefore be disclosed in greater detail.

The operating unit 1 is configured for performing several operations, for example for milling, for drilling, for cutting, etc, by using various, possibly interchangeable, tools, which are operationally associable with various spindles.

The multifunctional operating unit 1 comprises a supporting structure extended in a longitudinal direction, that can in be a vertical direction in use. The supporting structure can be constituted by a monobloc made of metallic material. The supporting structure has a central portion 2 and two lateral protruding portions 3 and 4 that protrude in a transverse (in use, horizontal) direction from two opposite sides F of the central portion 2. The supporting structure is (stiffly) connected to a portion of frame set up (in known manner) for attachment to a carriage or other movable element of the machine.

The unit 1 has a first axial sliding guide 5 extending in the longitudinal direction and fixed for at least the greater part of the axial extent thereof (in the specific case, for the entire length thereof), in contact with a first surface 6 of a (vertical) supporting structure arranged on the first lateral protruding portion 3. The unit 1 comprises a first machining unit 7 that has a first tool-holding spindle 8. The first machining unit 7 is slidably coupled with the first sliding guide 5 with the possibility of moving in the longitudinal direction.

The first axial sliding guide 5 is supported, in a continuous contact relationship, by a stiff surface of the supporting structure for at least one guide portion in which the stroke of the first machining unit 7 is provided; in particular, the first guide 5 has no parts affected by the stroke of the first unit 7 (and which are thus mechanically stressed by the passage of the first unit 7) and which protrude in a cantilevered manner from the supporting structure or are anyway devoid of a stiff support, supplied by the supporting structure, that is able to oppose the stress supplied by the first unit 7.

The unit 1 has a second axial sliding guide 5' extending in the longitudinal direction and fixed, at least for the greater part of the axial extension thereof (in the specific case for the entire length thereof), in contact with a second surface 6' of the supporting structure arranged on the second lateral protruding portion 4. A second machining unit 7' has a second tool-holding spindle 8' and is slidingly coupled with the second sliding guide 5' with the possibility of moving in a longitudinal direction.

The second axial sliding guide 5' is supported, in a continuous contact relationship, by a stiff surface of the supporting structure at least for one guide portion in which the stroke of the second machining unit 7' is provided; in particular, the guide 5' does not have parts that are affected by the stroke of the unit 7' (and which are thus mechanically stressed by the passage of the unit 7') and which protrude in a cantilevered manner from the supporting structure or are devoid of a stiff support, supplied by the supporting structure, that is able to oppose the stress supplied by the unit 7'.

A third axial sliding guide 5" extends in the longitudinal direction and is fixed, at least for the greater part of the axial extent thereof, or, as in the specific case, for the entire length thereof, in contact with a third surface 6" of the supporting structure arranged on a first end of the central portion 2. The third surface of the supporting structure is arranged transversely (perpendicularly) to the two opposite sides F of the central portion 2.

In the specific case, the first and the second surfaces 6 and 6' of the supporting structure both face a first side of the unit 1, whilst the third surface 6" of the supporting structure faces a second side of the unit opposite the first side.

A third machining unit 7" has a third tool-holding spindle 8" and is slidingly coupled with the third sliding guide 5" with the possibility of moving in the longitudinal direction. The third axial sliding guide 5" is supported, in a continuous contact relationship, by a stiff surface of the supporting structure at least for a guide portion in which the stroke of the second machining unit 7" is provided; in particular, the third guide 5" does not have parts that are affected by the stroke of the third unit 7" (and which are thus significantly mechanically stressed by the effect of the passage of the third machining unit 7") and which protrude in a cantilevered manner from the supporting structure or are anyway devoid of a stiff support, provided by the supporting structure, that is able to oppose the stress supplied by the third machining unit 7".

A fourth axial sliding guide 5"' extends in the longitudinal direction and is fixed, at least for most of the axial extent thereof, or, as in the specific case, for the entire length thereof, in contact with a fourth surface 6"' of the supporting structure arranged on a second end of the central portion. The aforesaid second end is opposite the aforesaid first end. The two lateral portions 3 and 4 protrude from the first end.

The fourth surface 6" of the supporting structure is arranged transversely (perpendicularly) to the aforesaid two sides F opposite the central portion 2. The fourth surface 6"' of the supporting structure faces the aforesaid first side of the unit.

A fourth machining unit 7"' has a fourth tool-holding spindle 8"' and is slidingly coupled with the fourth sliding guide 5"' with the possibility of movement in the longitudinal direction.

The fourth axial sliding guide 5"' is supported, in a continuous contact relationship, by a stiff surface of the supporting structure at least for a guide portion in which the stroke of the fourth machining unit 7"' is provided; in particular the fourth guide 5"' does not have parts that are affected by the stroke of the fourth unit 7"' (and which are thus mechanically stressed by the effect of the passage of the fourth machining unit 7"') and which protrude in a cantilevered manner from the supporting structure or are anyway devoid of a stiff support, provided by the supporting structure, that is able to oppose the stress supplied by the fourth machining unit 7"'.

The first, second, third and fourth sliding guides 5, 5', 5" and 5"' each comprise a prismatic guide with a coupling of the recirculating revolving elements (balls and/or rollers) type.

The first machining unit 7 can be associated, as in the specific example, with a disc blade. The second machining unit 7' can be associated, for example, with a vertical-axis tool (for example a milling and/or drilling tool). The third and fourth machining units 7" and 7"' can be associated in particular with two respective and different milling units with a horizontal axis.

It has been found that the aforesaid arrangement and structure of the various machining units enable the unit to be compacted significantly.

The first machining unit 7 is arranged in a first zone facing a side F of a central portion 2 and the second machining unit 7' is arranged in a second zone facing the other side F of central portion. The third machining unit 7" partially faces the third surface 6" of the supporting structure and partially faces a lower surface of the central portion 2. The aforesaid lower surface join together the third and fourth surfaces 6" and 6"' of the supporting structure and moreover joins together the two opposite sides F of the central portion 2. The fourth machining unit 7"' partially faces the fourth surface 6"' of the supporting structure and partially faces the aforesaid lower surface.

It has been found that also the aforesaid arrangement of the various machining units enables the unit to be compacted significantly.

The various spindles 8, 8', 8" and 8"' of the operating unit can be of various types and be intended to carry different types of tool.

In the specific case disclosed here, the first spindle 8 has a rotation axis (which in the specific case is horizontal) that is perpendicular to the longitudinal direction and transverse to the two opposite sides of the central portion 2. The second spindle 8' has a (vertical) rotation axis parallel to the longitudinal direction. The third and fourth spindles 8" and 8"' each have a (horizontal) rotation axis that is perpendicular to the longitudinal direction and transverse to the two opposite sides of the central portion 2.

In the specific case disclosed here, each of the aforesaid axial sliding guides 5, 5', 5" and 5"' does not have any end operating portion that protrudes in a cantilevered manner from the supporting structure, where as operating portion is intended a portion that exerts a guiding action on a respective movable machining unit.

Constructing the axial sliding guides 5, 5', 5" and 5"' and the connection thereof to the supporting structure (so that each guide portion affected by the stroke of the respective machining unit is in contact with a portion of supporting structure capable of offering resistance to the stress supplied by the machining unit) reduces tool deformation during machining and thus improves the precision and quality of the machined products.

In the specific case, the central portion 2 has a plurality of longitudinal through holes that are parallel (vertical) to one another, each of which housing an element (the various elements have been indicated overall by 10) of elongated shape, a stem or shaft, that is movable in a longitudinal direction and connects a machining unit to driving means that are known and not disclosed in detail, that are arranged in the upper part of the operating unit. The elements 10 of elongated shape can be used, for example, to transmit to the machining unit the movement in a longitudinal direction and/or the machining energy for the tool. In the specific case, holes are present that house two groups (for example triads) of elements 10 of elongated shape that are respectively connected to the third and to the fourth machining units 7" and 7"'.

The multifunctional operating unit can further comprise, as in the illustrated example, a multiple drilling head 11 (preset for holes with a vertical axis) situated at least partially below the lower surface of the central portion 2 of the supporting structure. The multiple drilling head 11 is connected to driving means, which is arranged in the upper part of the unit, by a transmission system arranged at least partially in one or more holes obtained inside the central portion 2. The head 11 is arranged in a central zone of the unit that is externally bounded, or surrounded, by the four machining units 7, 7', 7" and 7"'.

## Claims

1. Multifunctional operating unit comprising:
- a supporting structure (2, 3, 4) extending in a longitudinal direction;
- a first axial sliding guide (5) extended in said longitudinal direction and having a longitudinal side that is fixed, at least for most of the axial extent thereof, in contact with a first surface of said supporting structure;
- a first machining unit (7) that has a first tool-holding spindle (8) and is coupled with said first sliding guide (5) with the possibility of moving in said longitudinal direction;
- a second axial sliding guide (5') extended in said longitudinal direction and having a longitudinal side that is fixed, at least for most of the axial extent thereof, in contact with a second surface of said supporting structure;
- a second machining unit (7') that has a second tool-holding spindle (8') and is coupled with said second sliding guide (5') with the possibility of moving in said longitudinal direction.

2. Unit according to claim 1, wherein said supporting structure has a central portion (2) and first and second lateral protruding portions (3; 4) that protrude in a transverse direction from two opposite sides of said central portion; said first surface of the supporting structure, to which said first guide (5) is fixed, being arranged on said first lateral protruding portion (3); said second surface of the supporting structure, to which said second guide (5') is fixed, being arranged on said second lateral protruding portion (4).

3. Unit according to claim 2, comprising:
- a third axial sliding guide (5") extended in said longitudinal direction and having a longitudinal side that is fixed, at least for most of the axial extent thereof, in contact with a third surface of the supporting structure arranged on a first end of said central portion (2), said third surface being arranged transversely to said two opposite sides of said central portion (2), said first and second surfaces both facing a first side, said third surface facing a second side opposite said first side;
- a third machining unit (7") that has a third tool-holding spindle (8") and is coupled with said third sliding guide (5") with the possibility of moving in said longitudinal direction.

4. Unit according to claim 3, comprising:
- a fourth axial sliding guide (5"') extended in said longitudinal direction and having a longitudinal side that is fixed, at least for most of the axial extent thereof, in contact with a fourth surface of the supporting structure arranged on a second end of said central portion (2), said second end being opposite said first end, said fourth surface being arranged transversely to said two opposite sides of said central portion (2), said fourth surface facing said first side;
- a fourth machining unit (7"') that has a fourth tool-holding spindle (8"') and is coupled with said fourth sliding guide (5"') with the possibility of moving in said longitudinal direction.

5. Unit according to claim 4, wherein said first machining unit (7) is arranged in a first zone facing a first of said two opposite sides of said central portion (2) and said second machining unit (7') is arranged in a second zone facing a second of said two opposite sides of said central portion (2), said third machining unit (7") partially facing said third surface of the supporting structure and partially facing a lower surface of said central portion (2), said lower surface joining together said third and fourth surfaces of the supporting structure and further joining together said two opposite sides of said central portion, said fourth machining unit (7"') partially facing said fourth surface of the supporting structure and partially facing said lower surface.

6. Unit according to claim 5, wherein said two lateral protruding portions (3; 4) protrude from said first end of said central portion.

7. Unit according to any one of claims 4 to 6, wherein each of said first, second, third and fourth sliding guides comprises a guide of the prismatic type with coupling of the recirculating revolving elements type.

8. Unit according to any preceding claim, wherein said supporting structure comprises a monobloc made of metallic material.

9. Unit according to any one of claims 2 to 8, wherein said first spindle (8) has a rotation axis that is perpendicular to said longitudinal direction and transverse to said two opposite sides of said central portion (2), said second spindle (8') having a rotation axis parallel to said longitudinal direction.

10. Unit according to any preceding claim, wherein each of said first and second axial sliding guide (5; 5') does not have any end operating portion that protrudes in a cantilevered manner from said supporting structure.

11. Unit according to any one of claims 4 to 10, wherein each of said third and fourth axial sliding guides (5"; 5"') does not have any end operating portion that protrudes in a cantilevered manner from said supporting structure.

12. Unit according to any one of claims 2 to 11, wherein said central portion (2) has a plurality of longitudinal through holes, in each of which an element (10) of elongated shape is housed that is movable in a longitudinal direction for connecting one or more of said machining units (7; 7'; 7" ; 7"') to driving means placed above said central portion (2).
